Europäisches Patentamt

European Patent Office

Office européen des brevets

(11) Publication number: **0 111 478**
**B1**

## (12) EUROPEAN PATENT SPECIFICATION

(45) Date of publication of patent specification: **12.11.86**

(51) Int. Cl.⁴: **B 01 J 3/02, B 01 J 10/02**

(21) Application number: **82902238.3**

(22) Date of filing: **10.06.82**

(86) International application number:
**PCT/US82/00791**

(87) International publication number:
**WO 83/04378 22.12.83 Gazette 83/29**

(54) **APPARATUS FOR THE SULFONATION OR SULFATION OF ORGANIC LIQUIDS.**

(43) Date of publication of application:
**27.06.84 Bulletin 84/26**

(45) Publication of the grant of the patent:
**12.11.86 Bulletin 86/46**

(84) Designated Contracting States:
**DE FR GB NL**

(56) References cited:
**EP-A-0 003 907
US-A- 487 100
US-A-2 010 405
US-A-2 422 882
US-A-2 724 549
US-A-3 347 620
US-A-3 371 059
US-A-3 476 310
US-A-3 775 062
US-A-3 902 857**

**No relevant documents have been disclosed.**

(73) Proprietor: **TRINLO CORPORATION
78 Winding Way
Stirling, NJ 07980 (US)**

(72) Inventor: **Vander MEY, John E.
78 Winding Way
Stirling, NJ 07980 (US)**

(74) Representative: **Ford, Michael Frederick et al
MEWBURN ELLIS & CO. 2/3 Cursitor Street
London EC4A 1BQ (GB)**

Courier Press, Leamington Spa, England.

## Description

U.S. Patents disclosing methods of sulfonating thin films of organic liquids by related means include U.S. Patent 3,902,857 filed by John E. Vander Mey and Frank J. Kremers on August 13, 1973 and U.S. Patent 4,163,751, a division of the above, filed on August 7, 1979.

Background of the invention
1. Field of the invention

This invention relates to an apparatus for reacting a thin film of an organic liquid with a gaseous medium under reduced pressure. In particular, this invention relates to an apparatus for continuously reacting a sulfonatable or sulfatable organic liquid with sulfur trioxide.

2. Description of the prior art

In recent years several processes and several types of apparatus have been suggested for reacting thin films of sulfonatable and sulfatable organic liquids with sulfur trioxide. Hereinafter when reference is made to sulfonation processes and to sulfonatable materials, it is to be understood that sulfation processes and sulfatable materials are also included, where their inclusion is applicable.

As the need for developing more forms of energy has grown, sources of oil, once considered too difficult or uneconomical to recover have now assumed greater importance. This fact has now provided great impetus for improving sulfonating processes and apparatus, for large quantities of sulfonated oil detergents are now used in the "tertiary" oil treatment for the recovery of residual oil from the ground, as can be obtained, for example, from otherwise exhausted oil wells.

This technique, also known as the "Marathon Process" is presently employed to recover some of the vast amount of oil still remaining in the ground. The process involves the use of large quantities of oil-soluble detergents for solubilizing oil remaining in the ground which has not been attainable by the methods used in the past.

But there are also many other uses for sulfonated organics, and whereas color is unimportant when sulfonated oil detergents are employed for oil recovery, the lack of color becomes important in the manufacture of detergents and surface active agents from alkyl aryl hydrocarbons or aliphatic alcohols. Where the final product is designed for household use, a colorless or substantially colorless product is of prime importance.

Sulfonation with sulfur trioxide has advantages over sulfonation procedures using oleum, but the reaction between sulfur trioxide and sulfonatable organic compounds is generally violent and difficult to control. The uncontrolled exothermic reaction provides an undesirable colored product, hence various means to control the reaction have been suggested.

Some of the suggested processes require large quantities of an inert carrier gas such as air, introduced at high velocities to move a thin film of organic liquid along a cooled surface during the reaction. Such processes require air compressors and dryers, becoming costly both because of equipment and power requirements.

A process and apparatus for reacting a thin film of an organic liquid with a gaseous reactant which minimizes the problems discussed above is described in U.S. Patents 3,902,857 filed on August 13, 1973, and U.S. Patent 4,163,751, a division of the above filed on August 7, 1979.

It would be desirable, however, to provide an improved process and apparatus for reacting a thin film of an organic liquid with a gaseous sulfur trioxide in a manner to increase production, reduce the costs of operation, reduce the amount of plant space required and provide a high quality substantially colorless product. It would be desirable to provide a sulfonating apparatus so compact as to be readily constructed as a mobile unit, capable of movement to any location where a continuing supply of a sulfonated product is required. Further, it would be desirable to provide such a compact unit capable of still higher production rates in those instances where product color is of secondary importance.

Summary of the invention

The present invention is directed to an improved process for reacting a thin film of an organic liquid with a gaseous medium. The process comprises the steps of introducing the organic liquid onto the inner curved surface of a rotating spheroidal reaction chamber at its axis or polar area, rotating the reaction chamber at a velocity such that the organic liquid is continuously formed into a thin film on the curved reaction surface, dividing the film covered curved reaction surface into three or more successive concentric reaction areas, depositing over each reaction area a controlled amount of said gaseous medium to thereby control the rate of reaction as the liquid film proceeds from one curved reaction area to the next under the urging of centrifugal force, reacting the organic liquid and the gaseous medium stepwise, under subatmospheric pressure on the rotating curved reaction surface, moving the resulting reaction product to the equatorial region of the rotating reaction chamber, and collecting the reaction product from the equatorial region of the spheroidal reaction chamber.

The apparatus of this invention for reacting a thin film of an organic liquid with a gaseous medium comprises an oblate or substantially spheroidal reaction chamber mounted on a supporting frame for rotation on its axis in a substantially horizontal position, with an inner reaction surface; evacuating means for maintaining the reaction chamber under subatmospheric pressure; separating means to divide the reaction surface into successive reaction areas or segments, thus forming corresponding individual chambers to which the reaction areas are exposed; a first depositing means to deposit the organic liquid on the reacting surface, a second depositing means for depositing controlled quantities of the gaseous reactant within the individual chambers, rotating means to rotate the reaction chamber at a speed such that the organic liquid is continuously moved by centrifugal action as a thin film, successively, over the concentric reaction areas for exposure to the gaseous reactant, and the resultant reaction product is continuously moved to the inner periphery of the reaction chamber where it accumulates; cooling means for controlling the reaction temperature; and means for removing the reaction product from the reactor.

When the gaseous reactant is sulfur trioxide, this may be introduced as a substantially undiluted gas, with the subatmospheric pressure being maintained below 100 mm Hg, preferably below 25 mm Hg. The sulfur trioxide may also be introduced as a mixture of sulfur trioxide and an inert gas such as air. The output of a sulfur burner system designed to deliver "converter gas" of about 8% $SO_3$ may be used, and in fact satisfactory results may be obtained even if the $SO_3$ content is as low as 4%. With the employment of such low strength sulfur trioxide the subatmospheric pressure of the reaction chamber may be maintained at about one-half atmosphere or less. The process here disclosed can therefore be operated successfully employing a gaseous sulfur trioxide of from about the concentration of "converter gas" to pure sulfur trioxide obtained from such sources as stabilized liquid sulfur trioxide, oleum, or other conventional sources. Preferably, substantially pure sulfur trioxide is used with the pressure within the reaction chamber maintained below about 25 mm Hg.

The process here disclosed produces far less air pollution than is obtained from conventional sulfonating apparatus, less power is required, a small vacuum pump is employed rather than a large air compressor and only a small scrubber is required.

Still another advantage of the apparatus of my invention is that it is small, compact, produces a high quality product in good yield, and can be constructed as a mobile unit for ready removal to any point where the product is required.

Although the present invention may be used for a variety of chemical reactions between organic liquids and gaseous reactants, in a preferred embodiment of this invention the gaseous medium is sulfur trioxide and the organic liquid comprises a sulfonatable or sulfatable organic liquid.

Description and drawings of embodiments

Figure 1 of the drawings is a simplified cross sectional diagram of a rotary spherical reaction chamber embodying the present invention.

Figure 2 is a partially exploded perspective view of the preferred embodiment of the present invention. This version has an oblate reaction chamber, the cross section being substantially elliptical. This drawing and those to follow are based on an actual prototype reactor.

Figure 3 is a broken, partially exploded view of a detail of the stationary central column through which the gaseous reactant enters, and the product is withdrawn.

Figure 4 is a perspective view of one type of screen diffuser which can be used between the separator discs to improve the uniformity of the distribution of the gaseous reaction within each separate chamber.

Figure 5 is a cross sectional view in elevation of the assembled reaction chamber, being the same embodiment as the exploded view of Figure 2.

Figure 6 of the drawings is a cross sectional view taken through 6—6 of Figure 5.

The process and apparatus of the present invention are particularly applicable in the sulfonation or sulfation by gaseous sulfur trioxide of appropriate organic liquids. Such compounds include saturated alcohols, phenols, olefinic compounds and monocyclic and polycyclic aromatic compounds. For example, compounds suitable for sulfation by sulfur trioxide include those fatty acids containing 8 to 20 carbon atoms such as lauryl, myristyl and cetyl alcohol; ethoxylated derivatives of the above fatty acids and the ethoxylated derivatives of alkyl phenols wherein the alkyl group contains from about 8 to about 16 carbon atoms such as octene, decene, dodecene, tetradecene, hexadecene, etc.; aromatic hydrocarbons such as those containing benzene, anthracene, or like structures and alkyl substituted derivatives thereof, such as toluene, ethylbenzene, dodecyl benzene, etc. The advantages of the present method of sulfonation are particularly evident in the production of alkyl aromatic sulfonic acids which when neutralized with an alkali metal hydroxide, an amine or an alkanol amine form highly effective detergent compounds. Thus the process of the present invention will be preferably applied to those alkylated aromatic compounds in which the alkyl groups contain a total of from 8 to 22 carbon atoms and in particular, 12 to 14 carbon atoms. In those instances where the organic compound is a solid at room temperatures, it may be preheated to the liquid state, or liquefied by any other desired procedure.

The sulfur trioxide used as the active ingredient may be obtained from any suitable source. It may be vaporized from stabilized liquid sulfur trioxide, obtained from oleum or from other conventional sources. When such gaseous sulfur trioxide is undiluted with other gases, the sulfonation or sulfation is preferably maintained at a subatmospheric pressure of below 100 mm Hg, or better still, below 25 mm pressure Hg.

However, dilute sulfur trioxide is also applicable. Converter gas containing about 8% sulfur trioxide with the balance being air gives good results, and in fact the sulfur trioxide content can be as low as about 4%. In those instances where such a dilute sulfur trioxide is used, the subatmospheric pressure is maintained at about half an atmosphere (380 mm Hg.) or lower. With other dilutions of higher concentration, intermediate pressures would apply.

An important benefit offered by the present invention stems from its compact structure and relatively high product output. It is compact enough to be rendered mobile, and sulfonators made according to the principles here disclosed can be moved to wherever a supply of a sulfonated product is required. This is especially important today when sulfonated oils are of such importance in the recovery of oil from shale, exhausted oil wells and oil-bearing sands and tars.

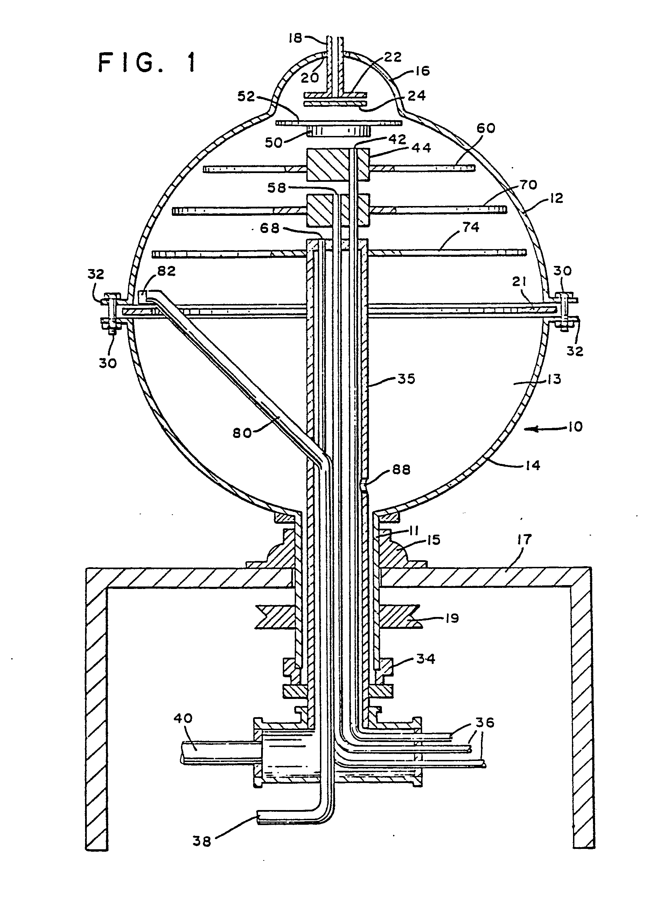

With reference to the drawings of Figures 1, 2 and 5, there is shown as a preferred embodiment, a rotatable spherical, spheroidal or oblate sulfonation reactor indicated generally at 10. This includes reaction chamber 13 comprising hemispherical sections 12 and 14. These hemispheres are of a material such as stainless steel, resistant to the reactants to be employed. This is also true of all those surfaces which come in contact with the reactants, with the possible exception of a few small parts mentioned below which may be fabricated of a resistant polymeric material such as Teflon. In the prototype reactor, 304 stainless steel was found to be satisfactory.

When ready for assembly the rims or perimeters of these two hemispheres 12 and 14 are brought together, separated only by a metal product-collector ring 21 having an outside diameter substantially equal to that of hemispheres 12 and 14, but an inner diameter up to about 2 inches less than the inner diameter of the hemispheres at their perimeters.

In the prototype sulfonator those sections herein referred to as "hemispheres" are actually 1.07 metre (42 inch) dish heads of 5.5 mm (7/32 inch) 304 stainless steel. The stainless steel product collection ring 21 is a circle or ring of channel steel with the sides of the channel extending outwardly, with the uppermost side of the channel having an outside diameter equal to the outer diameter of the hemispheres, and the lower side of the channel having a diameter just under that of the inside diameter of the hemispheres so that when ready for assembly, the lower side of the channel will fit inside the rim of the lower hemispheres and the upper side of the channel will extend over the rim, lying gasket-like between the butted rims of both hemispheres. The inner diameter of this collector ring 21 in the prototype is about 19 n.m (3/4 inch) less than the inside diameter of the hemispheres at their rims so that the product-collector ring extends inwardly, 9.5 mm (3/8 inch) beyond the rims of the hemispheres. A clear view of the cross section of product-collector ring 21 as positioned in the prototype reactor is shown in Figure 6. Although this is the preferred type of ring, a flat ring of sheet stainless steel would serve as well.

In the center of the bottom of the lower hemisphere 14 there is a circular opening at the perimeter of which is fixed a strong hollow shaft 11 extending downwardly from the reaction chamber. This shaft supports and rotates reaction chamber 13. Shaft 11 is journaled in bearing 15 shown fixed to supporting frame 17. Sheave 19 fixed concentrically to the hollow shaft 11 below frame 17 whereby power transmitted from the motor not shown can rotate shaft 11 journaled at 15 and the reaction chamber 13 on a substantially vertical axis.

Hollow shaft 11 surrounds a stationary column 35 which extends below the rotary hollow shaft and is fixed with respect to supporting frame 17. The rotary hollow shaft 11 is journaled and sealed by a conventional ceramic-carbon mechanical seal 34. Such mechanical seals are marketed by the Crane Packing Co., and others. (Figure 1).

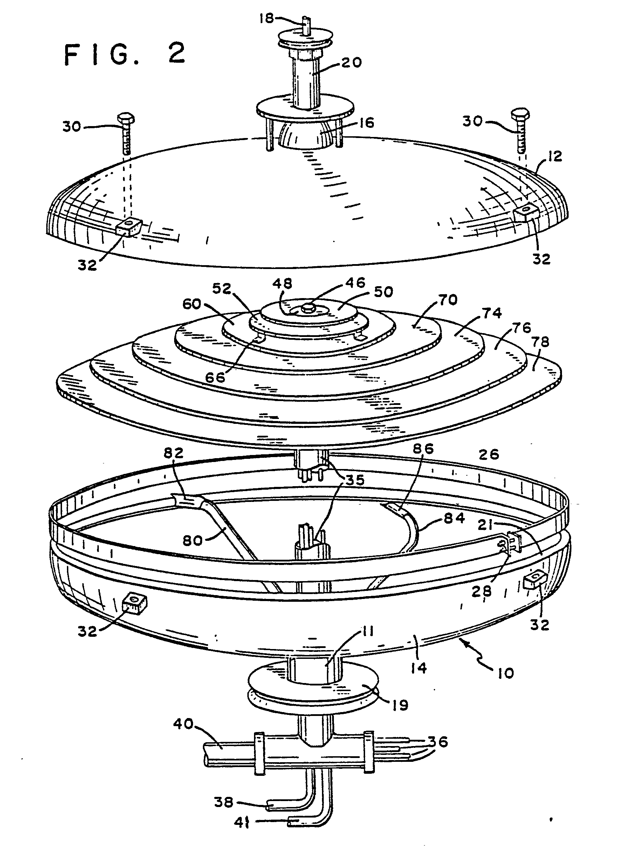

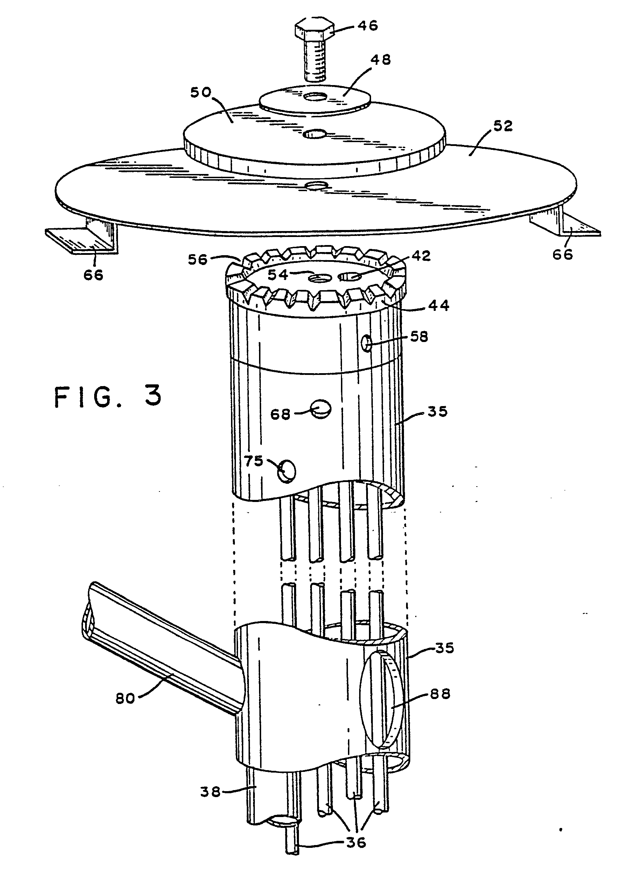

This stationary column 35 also extends upwardly almost to the top of reaction chamber 13 and contains a plurality of conduits, 36 and 38. Extending from the lower end of this column are at least two tubes 36 for conducting sulfur trioxide up into the reaction chamber. Three are shown in Figure 1, and four in Figures 2 and 3. If desired, still more can be used for fine reaction control, although about four is preferred. It would be within the scope of the present invention to introduce the sulfur trioxide into the stationary column 11 through one conduit and use the column as a manifold to divide the sulfur trioxide into two or more streams within the column or as it leaves the column, within reaction chamber 13.

Also, extending from the lower end of the column is a product line 38 (Figures 1, 2 and 3), and a spent gas outlet 40 (Figures 1 and 2) which is connected with a small scrubber and vacuum pump, not shown. Still another conduit 41 (Figure 2) can be included to withdraw any small amount of colored product which, if formed, can be collected in the lower hemisphere.

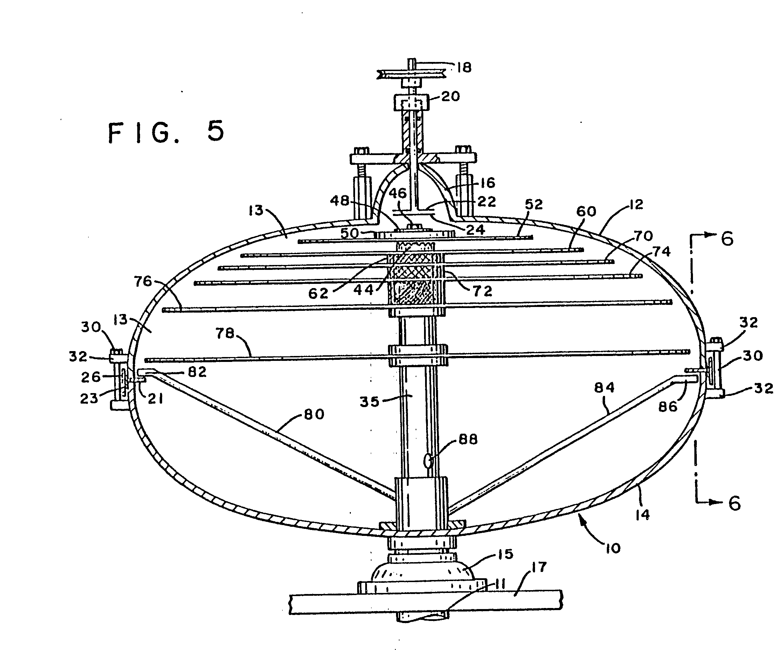

Preferably, one of the conduits of the group or bundle 36 extends to an opening 42 at the top of column 35 and enters a distributing head 44. In the preferred embodiment of the present invention, as shown in Figures 2 and 5, and detailed in Figure 3, the upper portion of column 35 is shown as Teflon or any other suitable resistant material, and the conduits therein are cast or drilled within the solid Teflon. Stainless steel bolt 46 passing through stainless steel washer 48, Teflon disc 50 and stainless steel separator disc 52 engages threaded opening 54 to draw disc 52 tightly against distributing head 44. Sulfur trioxide or other gaseous reactant ascending a conduit, being one of the bundle 36 and escaping through opening 42 would be distributed by distributing head 44 through notches 56.

The type of distributing head is not essential. It can be a ring or cylinder of fritted glass, stainless steel, or a perforate ring of suitable material, stainless or Teflon woven screening, or it can be dispensed with entirely without affecting the end product to a marked degree.

In the embodiment of Figure 1, Teflon disc 50 is adjacent to, and becomes a part of the distributing head; and the separator disc 52 is above rather than below it. Whether the Teflon disc 50 is above or below separator disc 52 is inconsequential.

Separator disc 52 has a diameter such that it leaves an annular space of no more than about 2.5 cm (1 inch), preferably about 6 mm ($\frac{1}{4}$ inch) between its perimeter and the adjacent wall of the upper hemisphere 12. Since the disc is attached to the stationary column 35, it too, remains stationary as the rotating reaction chamber turns about it.

Below separator disc 52 there is a second separator disc 60, also fixed to the stationary column 35. It is parallel to disc 52 and also extends almost to the wall of the upper hemisphere, leaving an annular space of no more than about 2.5 cm (1 inch), but preferably about 6 mm ($\frac{1}{4}$ inch). The vertical distance between the two discs is such that the annular area defined by these two circular separator discs comprises between about 5% and 15% of the total inner curved reaction surface of the upper hemisphere 12, or preferably about 7%.

The thickness of the circular separator discs is not critical provided they are heavy enough to remain substantially rigid. In the prototype sulfonator, 304 stainless steel was used having a thickness of 1.2 mm (0.049 inches). Supporting separators 66 (Figures 2 and 3) can be employed if desired but are not essential.

Just below circular separator plate 60 there is an opening 58 in communication with a second conduit of the bundle 36, also for the introduction of the gaseous reactant such as sulfur trioxide.

Below circular separator disc 60 and opening 58 there is a third circular separator disc 70, also fixed to the column 35 at its center. It is parallel with separator disc 60 and also extends almost to the wall of the upper hemisphere leaving an annular space of no more than about 2.5 cm (1 inch) preferably about 6 mm ($\frac{1}{4}$ inch).

The vertical distance between the two circular separator discs 60 and 70 is such, that the annular areas of the wall or reaction surface defined by circular separator discs 60 and 70 comprises between about 7% to 20% of the total inner curved reaction surface of the upper hemisphere 12, or preferably about 10%.

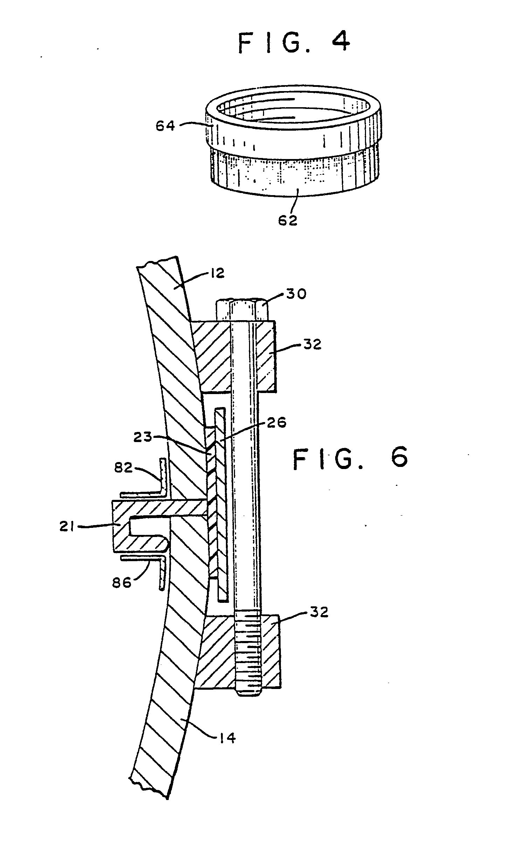

Preferably a cylindrical screen 62 or porous or perforate cylinder surrounds column 35 between separator discs 60 and 70 to aid in producing an even distribution of the gaseous reactant leaving opening 58. Details of a suitable 304 stainless screen cylinder attached to a Teflon ring 64 is shown as Figure 4. The inner surface of ring 64 can be threaded to cooperate with matching threads on column 35 for precise positioning of the distributing screen 62 (Figures 3 and 5) and for positioning separator disc 60.

Just below circular separator disc 70 there is another opening 68 in communication with a third conduit of the bundle 36, for the introduction of the gaseous reactant. Below this there is a fourth circular separator disc 74 also fixed to the stationary column. It is parallel to discs 60 and 70 and extends almost to the wall of the upper hemisphere, also leaving an annular space of less than about 2.5 cm (1 inch), preferably about 6 mm ($\frac{1}{4}$ inch).

The vertical distance between separator discs 70 and 74 is such that the annular area defined by separator discs 70 and 74 comprises between about 10% and 25% of the total inner curved reaction surface of the upper hemisphere 12, or preferably about 15%. As in the case of circular separator discs 60 and 70, preferably a cylindrical screen 72 (Figure 5) or other type of distributor surrounds column 35 between separator discs 70 and 74.

Just below separator disc 74 in the case of the embodiment shown in Figure 3, there is still another opening 75 in communication with the last conduit shown of the bundle 36 for the introduction of a gaseous reactant. Below this there is a fifth circular separator disc 76 also fixed at its center to the stationary column 35. It too, is parallel to discs 60, 70 and 74, and as with the latter, extends almost to the wall of the upper hemisphere 12, leaving an annular space of less than about 2.5 cm (1 inch), preferably about 6 mm ($\frac{1}{4}$ inch). (Figures 2 and 5). The vertical distance between discs 74 and 76 is such that the annular area defined by separator discs 74 and 76 comprises between about 20% and 30% of the total inner curved reaction surface of the upper hemisphere 12, or preferably about 25%.

The above circular separator discs divide the reaction surface into three concentric reaction zones in the case of the embodiment of Figure 1, and into four concentric reaction zones in the modified reaction chamber of Figures 2, 3 and 5. In the case of the preferred embodiment of Figures 2 and 5, still another circular disc 78 is shown, but this serves only as a baffle and not as a separator disc. It is positioned just above the collector ring 21 and has a diameter between about 12 mm to 10 cm ($\frac{1}{2}$ inch to 4 inches) less than the inside diameter of the product collecting ring 21 which is just below it. Preferably, the diameter is about 5 cm (2 inches) less than the inner diameter of the product collecting ring 21. Baffle disc 78 is not critical to the present invention but serves to prevent any oversulfonated mist from reaching the final colorless or essentially colorless product.

Hollow shaft 11 to which the driving pulley 19 for the rotary reaction chamber 13 is fixed, is adjustable within limits, so that it may be raised or lowered, and with it, the entire reaction chamber which is fixed thereto. It is clear, then, that by thus raising or lowering the reaction chamber in relation to the fixed column 35 which supports the separator discs, the annular clearances of these circular discs and the concentric areas of reaction surface can be altered within limits. The bearing 15 and the seal 34 permit this adjustment.

The amount of sulfur trioxide or other gaseous reactant that can be delivered to each of the partitioned spaces between the circular separator discs can be controlled. Each of the conduits of bundle 36 can have its own control valve, not shown, as does the prototype sulfonator. These control valves are preferably in communication with a manifold supplied with the reactant gas of the concentration and pressure desired. Further, each can have its own flow meter and even automated equipment which is readily available to mechanically control the flow of gas, independently, to each partitioned space.

In the preferred embodiment there is fixed, at the top center of the upper hemisphere 12, a bubble or bell-shaped appendage 16, the lower edge of which is joined smoothly to a circular opening at the top center of the upper hemisphere 12, said circular opening having the same diameter as that of the skirt or perimeter of bubble 16. The inner surface of the bubble 16 and the inner surface of the upper hemisphere 12, which is the reaction surface, are preferably highly polished.

An inlet feed pipeline 18 for the introduction of the organic liquid to be reacted with the gaseous reactant such as sulfur trioxide, passes through an opening in the top center of bubble 16 where it is journaled for longitudinal rotation. It is preferably supplied with suitable bearings for high speed rotation and passes through a substantially pressure-tight seal 20. Rotatable inlet feed pipeline 18 is in communication with a stationary conduit, the connection being made through a gas tight seal into which pipeline 18 is journaled. The conduit communicating which rotatable pipeline 18 is in communication with a controlled source of the liquid feed to be sulfonated or sulfated.

The lower end of feed line 18 terminates perpendicularly between two parallel discs, the diameter of which can be approximately half the diameter of the walls of the bubble 16 at its perimeter. Feed line 18 is sealed into a central opening in the first disc, the second disc of substantially the same diameter, being blank. These parallel discs are fastened together at three or more points. The vertical distance between these discs is related to the size of the sulfonator and to the amount of organic liquid to be fed into the reaction chamber. Assuming that the diameter of the feed inlet pipeline is chosen to be commensurate with the rate of flow of organic liquid to be handled, the distance between the discs is preferably about one quarter of the diameter of the feed inlet pipeline 18, or less. If desired, the parallel discs can have a plurality of perpendicular radiating impeller blades, straight or curved, as in the centrifugal pump, but these are not essential. Other types of spinning distributor heads can be used. A very effective type consists of two to four or more tubes in communication with the feed pipeline and radiating outwardly and perpendicularly from it. These may extend quite close to the wall of the bubble, being perpendicular to it, or they may turn away from their direction of rotation so as to be substantially parallel to the wall of the bubble and close to it.

Other types of spinning distributors are also satisfactory such as a hollow disc, sphere, or other shape having openings in its perimeter through which the liquid feed can be distributed by centrifugal force to the walls of the bubble. Furthermore, the bubble itself could be eliminated, with the distributing head dispersing the liquid feed directly into the top of the upper hemisphere 12.

A sheave is fixed to the rotary inlet feed pipeline 18 for driving the distributing head 22 and 24. The spinning distributing head is spun at an appreciably greater speed than that of the rotary reaction chamber, and preferably in the direction opposite to that of the rotary reaction chamber to insure uniform distribution of the liquid organic reactant.

There is also provided a product take-off line 80 terminating in a scoop 82 to collect product as it builds up as a result of centrifugal force above product collection ring 21. The take-off line 80 conducts the product to a take-off pump, not shown, for removal. A lute, not shown, can be included in the line to insure a good seal. A gear pump for product removal is preferred. The pump can deliver the product to a product received not shown. Alternately, the receiver can be maintained at a subatmospheric pressure to thus eliminate the need for a pump.

In Figure 5 there is shown as an option, a discolored product take-off 84 with scoop 86 positioned to collect any material collected below the collector ring 21 coming from the lower hemisphere 14. An important feature of this invention is that all reacting surfaces face downwardly as well as inwardly, so that any mist formed which would not benefit from the cooling of the reaction surface, and would therefore be prone to overheating, over sulfonation and discoloration, would not fall back to the reaction surfaces, but would rapidly fall, because of the subatmospheric pressure, to the upper surface of the separator discs 60, 70, 74, or 76, or to the upper surface of baffle disc 78. All such material ultimately reaching the baffle disc would drop through the annular space surrounding baffle disc 78, to lower hemisphere 14. Here it would collect because of centrifugal force, below collector ring 21. So little such discolored product would be accumulated that it would easily be recovered from the bottom of the reactor after a short run, but the scoop 86 and discolored product take-off line 84 are shown in Figures 2 and 5 for the continuous removal of discolored product during a prolonged run, thus a novel method of continuously removing the bulk of substantially colorless product, and the small amount of discolored product, is provided. Any discolored product recovered can be combined with the main product when color is not critical, but kept separate where a colorless product is desired for use in househould detergents and the like.

Recycling of any incompletely sulfonated product is easily accomplished by pumping all or part of the product back to feed line 18, but with all the adjustments provided, variation of the area of the several reaction surfaces, adjustment of the several streams of gaseous reactant and of the amount of liquid feed, incomplete sulfonation need not be encountered.

The opening 88 in the stationary column 35 of Figures 1, 3 and 5, leads to the scrubber and vacuum pump not shown. It is the outlet for spent gas and provides the means for maintaining the system under reduced pressure.

When the reactor is to be closed, a band of suitable gasket material 23 of Figures 5 and 6, surrounds the juncture of the two hemispheres 12 and 14, so that the resulting reaction chamber 13 can be maintained at subatmospheric pressures. This band 23 is surrounded in turn by steel bellyband 26 of Figures 2, 5 and 6, with a simple tightening device 28 of Figure 2.

The hemispheres 12 and 14 are bolted together by two or more bolts 30 passing through aligned drilled projections 32 fixed to the sides of each hemisphere.

In operating the equipment as in sulfonating a sulfonatable oil, the reaction chamber is evacuated. If substantially pure sulfur trioxide is to be used, a pressure of less than about 100 mm Hg is maintained, preferably between about 4 and 25 mm Hg. The oil is then introduced through feed inlet pipeline 18 while the feed line and the disc distributor head 22—24 is spun at high speed. The sulfonatable oil is introduced into the reaction chamber while it is revolving in the direction opposite to that of the distributor 22—24 at a velocity of between about 25 and 400 RPM, preferably between about 100 and 200 RPM.

The liquid feed is thrown against the almost vertical polished inner wall of the bubble 16, and by centrifugal force, flows as a thin uniform film over the polished curved reaction surface toward the collection ring 21 at the equator or inner periphery of the rotating reaction chamber 13. In doing so it passes consecutively over the concentric annular areas separated by the circular separator disc 52, 60, 70, 74 and 76. Separate streams of sulfur trioxide, preferably independently controlled, are delivered to each partitioned chamber. Within each chamber the atmosphere provided does not supply sufficient sulfur trioxide to more than partially sulfonate that portion of the film of organic liquid momentarily exposed to that gaseous reactant. As the film of organic liquid flows over the annular reaction surfaces and passes one partitioned chamber after another, the ordinarily rapid reaction is slowed down. By the time it passes over the annular reaction surface exposed to the gaseous reactant between circular separator discs 74 and 76, the sulfonation has been virtually completed.

During the continuous process, zone heating or cooling as required is provided exteriorly by cold water jets or sprays, heated or cooled water or air, or heat lamps. The sulfonated product forced toward the reactor's inner perimeter collects above the collection ring 21 where it is continuously scooped up by scoop 82 of product line 80 and preferably directed to a gear pump and product receiver not shown. A product receiver maintained at subatmospheric pressure may be employed rather than a gear pump if desired.

A small sulfonator such as the 1.06 metre (42 inch) (diameter) prototype could be expected to produce between about 114 to 160 kg (250 and 350 lbs) of high quality product per hour. Any discoloured product which may form from mist as previously explained could, if present in sufficient quantity, be scooped up by scoop 86 of pipeline 84 of Figure 2 and collected by a separate gear pump and/or receiver not shown.

When treating highly viscous or solid sulfonatable materials, they can be fluidized by preheating, and if necessary, heat lamps or other sources of radiant energy can be used initially on the reaction surface.

The primary aim of this process and apparatus is to produce an essentially colorless high quality product. However, for some sulfonated products such as the sulfonated oils of value in the Tertiary process for the recovery of oil from exhausted oil wells, shales and oil bearing sands, color is of little concern.

While there is no need for the separation of darkened product, no collector ring is required within the reaction chamber. The product can be scooped from the inner periphery or equator of the rotating reaction chamber.

It is also possible, where color in the product is of no consequence, to operate the apparatus in an inverted position with the reaction chamber suspended downwardly from this driving mechanism, or constructed as shown, but with the liquid organic feed and the partitioning separator discs being located in the lower hemisphere. The reaction chamber can also be fabricated and operated with a set of separator discs in each of the two hemispheres, with or without baffle discs and with the fluid organic feed entering through rotating distributors at both poles of the rotating reaction chamber. The inner surface of both hemispheres is preferably a highly polished surface, and no collector ring is then required. The sulfonated product is continuously scooped from the inner periphery of the apparatus.

Quite apart from the use of the apparatus described as a sulfonator, it has also been found effective as a flash evaporator, either at atmospheric or subatmospheric pressures. Because of the thin film of liquid distributed over the evaporating surface, and the low evaporating temperatures possible, especially when the apparatus is used as a vacuum flash evaporator, products ordinarily discolored or chemically altered by heat can be effectively concentrated or evaporated in the apparatus described.

It will be apparent that the process disclosed and the apparatus of the invention will permit the continuous production of an especially high quality product at a reasonably high rate of production, and this from a small, compact apparatus which could be handled as a mobile unit and moved to those locations where a continuous supply of such product is required.

**Claims**

1. A sulfonation apparatus comprising a rotatable reaction chamber (13) providing a surface for liquid to flow over as a thin film, the chamber having a hollow shaft (11) fixed thereto and in communication with said chamber (13), said hollow shaft (11) being journalled into a support (17) and connected to means for rotating said shaft about a fixed axis, there being provided inlets for gas and liquid to the chamber, means for removal of reaction products, and gas pumping means for evacuating the reaction chamber characterised in that the reaction chamber (13) is spheroidal, having upper (12) and lower (14) hemispheres, and rotates about a substantially vertical axis; the said hollow shaft (11) surrounding the lower portion of a stationary column (35) extending upwardly substantially to the top of the upper hemisphere (12) within said rotatable reaction chamber (13), said hollow shaft (11) being rotatable about said stationary column (35) and said column having an opening (88) within the rotatable reaction chamber (13), which opening (88) serves, in conjunction with the said gas pumping means, for evacuating said reaction chambers, said stationary column (35) containing at least two gas conveying inlet pipelines (36) in communication with controlled sources of a gaseous reactant, each one of said gas conveying lines (36) terminating at its upper end in an opening (42, 58, 68, 75) in said stationary column with each of the said openings being positioned at a different level but within said upper hemisphere (12), said stationary column having attached to it a plurality of parallel discs, one (52) just above the uppermost opening (42) in said column, one (74, or 76) just below the lowermost opening (68 or 75) and one between each of the remaining openings, each of said discs encircling the stationary column (35) with its diameter such that it extends substantially to the inner wall of the upper hemisphere (12) at the particular level at which it is attached to the stationary column; below the lowest (74 or 76) of said discs at the perimeters and juncture of said upper (12) and lower (14) hemispheres of said reaction chamber there is positioned a collector ring (21) having an inner diameter less than the inner diameter of the reaction chamber at the juncture of said hemispheres, and about said collection ring and adjacent to the inner wall of said upper hemisphere, is positioned a stationary scoop (82) with its leading edge extending in the direction opposite to the direction of rotation of said rotatable reaction chamber, said scoop (82) being in communication with a liquid product conveying line (80), sloping downward and entering said stationary column, said liquid product conveying line being in communication with pumping means for continuously collecting liquid product accumulating above said collection ring, said scoop (82) being supported in its stationary position above said collector ring by the liquid conveying line and said stationary column to which said line is attached; and above the said parallel discs and at the top of said upper hemisphere there is journaled for independent axial rotation an inlet fluid conveying pipeline (18) terminating in a fluid dispersion means (22, 24), said fluid conveying pipeline being in communication with a source of supply of a liquid reactant, and with means for delivering said liquid reactant through said rotating dispersion means whereby said liquid reactant can be thrown outwardly by centrifugal force and evenly distributed on the inner wall of the upper hemisphere (12) near its pole, to flow as a thin uniform film through concentric bands of reaction surfaces of the inner wall of the upper hemisphere, separated by said parallel discs, for reaction with the controlled gaseous reactant leaving the several openings in said stationary column between said parallel discs, and whereby said product of the reaction will move to the collector ring by centrifugal force for collection and continuous removal by said scoop, said liquid product conveying line and said pumping means.

2. The apparatus in accordance with claim 1 wherein the inlet fluid conveying pipeline (18) and dispersion means comprises a rotatable inlet pipeline (18) axially journaled for independent rotation in a small hemispherical bubble-shaped appendage (16) to said upper hemisphere (12), its perimeter being sealed to a centrally located opening of equal perimeter in the top center of said upper hemisphere (12), said inlet pipeline (18) terminating just above the perimeter of the bubble-shaped appendage in a concentric circular dispersing means (22, 24) having about half the diameter of the bubble-shaped appendage (16) at that point and having a plurality of openings in its perimeter, whereby on feeding liquid reactant through the inlet pipeline while spinning the pipeline, the liquid is thrown against the nearly vertical walls of the hemispherical bubble-shaped appendage (16), to then form a thin uniform film on the sidewall of the upper hemisphere (12) as a result of its rotation.

3. An apparatus in accordance with claim 2 wherein said inlet pipeline (18) terminates just above the plane of the perimeter of said bubble-shaped appendage (16) in a juncture with at least two radially positioned tubes, each of which is in communication with said inlet pipeline, and each of which extends outwardly toward the walls of said bubble-shaped appendage, said tubes being angled away from the direction of rotation of said inlet pipeline, each tube to thereby terminate close to the walls of said bubble-shaped appendage and substantially parallel thereto, whereby on feeding liquid reactant through the inlet pipeline while it is spinning, the liquid is thrown against the nearly vertical walls of the hemispherical bubble-shaped appendage, to then form a thin uniform film on the sidewall of the upper hemisphere as a result of its rotation.

4. An apparatus in accordance with claim 2 wherein the concentric circular dispensing means at which said inlet pipeline (18) terminates, comprises a first (22) and second (24) disc of substantially identical diameter, separated by spacers, said inlet pipeline (18) being sealed perpendicularly to the first disc (22) at a central opening having approximately the same diameter as the inside diameter of the inlet pipeline, the second disc (24), parallel to the first and having no central opening, is separated from the first by a distance of about one-fourth or less of the diameter of the inlet pipeline, said rotatable inlet pipeline being rotatable at a higher speed than the rotatable reaction chamber (13) in the direction opposite to that of said reaction chamber.

5. The apparatus in accordance with claim 2, claim 3 or claim 4 in which the reaction chamber (13) is fabricated of suitable corrosion resistant material, said upper hemisphere (12) and the bubble-shaped appendage (16) having smooth polished inner surfaces with a smooth rounded juncture between said bubble-shaped appendage (16) and said upper hemisphere (12).

6. An apparatus in accordance with any one of the preceding claims wherein there is additionally, a second stationary scoop (86), this one being positioned below said collector ring and adjacent to the inner wall of the rotatable reaction chamber near its periphery, said scoop (86) having its lead edge extending in a direction opposite to the direction of rotation of said rotatable reaction chamber (13), said scoop being in further communication with pumping means for continuously collecting any low grade product accumulating below the collection ring.

7. The apparatus in accordance with any one of the preceding claims wherein said product collecting scoop (82) in communication with its liquid conveying line (80) is also in communication with a product receiver maintained under subatmospheric pressure.

8. An apparatus in accordance with any one of the preceding claims wherein the collection ring (21) has an inside diameter of about from 1.2 cm to 2.6 cm (1/2 to 3 inches) less than that of the inner diameter of the reactor at its equator, while the outside diameter of the collection ring may be equal to the inner diameter of the reactor chamber at its equator.

9. An apparatus in accordance with any one of the preceding claims having heat exchange means to effect heating or cooling of the reaction chamber externally as determined by the nature of the chosen reactants.

10. An apparatus as claimed in any one of the preceding claims including means to recycle said liquid reaction products to said reaction surfaces.

11. The apparatus as claimed in any one of the preceding claims including diffusion means through which said gaseous reactant passes after escaping from the plurality of openings in the stationary column.

12. The reactor as claimed in any one of the preceding claims wherein the collector ring (21) fixed at the equator of the reaction chamber comprises an extending lip of a circular seal which serves to connect two symmetrical convex dish heads at their rims to form said spheroidal rotatable reaction chamber.

13. A rotatable reactor for reacting a thin film of an organic liquid with a gaseous reactant comprising an oblate or substantially spheroidal reaction chamber (13) mounted on a supporting frame (17) for rotation on its axis in a substantially horizontal position, with an inner reaction surface; evacuating means for maintaining said reaction chamber under subatmospheric pressure; separating means comprising a plurality of parallel discs (52, 60, 70, 74, 76) to divide said reaction surface into successive reaction areas, thus forming corresponding individual chambers to which said reaction areas are exposed; said discs being perpendicular to said axis of rotation, a first depositing means (18) to deposit said organic liquid on said reaction surface, a second depositing means (36) for depositing controlled quantities of said gaseous reactant within said individual chambers; rotating means to rotate said reaction chamber at a speed such that said organic liquid is continuously moved by centrifugal force as a thin film, successively over said successive reaction areas for exposure to said gaseous reactant, and the resultant reaction product is continuously moved to the inner periphery of said reaction chamber where it accumulates, cooling means for controlling the reaction temperature and means (82) for removing said reaction product from the reactor.

14. A reactor as claimed in claim 13 including baffle means (78) to prevent small amounts of darkened product from below the baffle means combining with the main body of reaction product above it and means (86) to remove said small amounts of darkened product from the rotating reactor while it is in operation.

15. The apparatus in accordance with any one of the preceding claims in which the entire inner reaction surface of the reactor chamber is smooth and polished.

**Patentansprüche**

1. Sulfonierungsvorrichtung mit einer drehbaren Reaktionskammer (13) mit einer Oberfläche, über die Flüssigkeit als dünner Film fließen kann, wobei die Kammer eine hohle Welle (11) aufweist, die daran befestigt ist und mit der Kammer (13) in Verbindung steht, die hohle Welle (11) in einem Träger (17) gelagert und mit einer Einrichtung zum Drehen der Welle um eine feste Achse verbunden ist, Einlässe für Gas und Flüssigkeit in die Kammer, eine Einrichtung zum Entfernen von Reaktionsprodukten und eine Einrichtung zum Pumpen von Gas zum Evakuieren der Reaktionskammer vorgesehen sind, dadurch gekennzeichnet, daß die Reaktionskammer (13) kugelförmig ist, eine obere (12) und eine untere (14) Hemisphäre aufweist und um eine im wesentlichen vertikale Achse rotiert, die hohle Welle (11) den unteren Abschnitt einer stationären Säule (35) umgibt, die sich innerhalb der drehbaren Reaktionskammer (13) nach oben im wesentlichen bis zum Oberteil der oberen Hemisphäre (12) erstreckt, die hohle Welle (11) um die stationäre Säule (35) drehbar ist, und die Säule eine Öffnung (88) innerhalb der drehbaren Reaktionskammer (13) aufweist, wobei diese Öffnung (88) zusammen mit der Einrichtung zum Pumpen von Gas zum Evakuieren der Reaktionskammer dient, die stationäre Säule (35) mindestens zwei Gas befördernde Einlaßleitungen (36) in Verbindung mit gesteuerten Quellen eines gasförmigen Reaktanten enthält, jede der Gas befördernden Leitungen (36) an ihrem oberen Ende in einer Öffnung (42, 58, 68, 75) in der stationären Säule endet, wobei jede der Öffnungen in einer anderen Höhe, aber innerhalb der oberen Hemisphäre (12) angeordnet ist, an der stationären Säule mehrere parallele Scheiben befestigt sind, eine (52) davon gerade über der obersten Öffnung (42) in der Säule, eine (74 oder 76) unmittelbar unterhalb der untersten Öffnung (68 oder 75) und je eine zwischen den übrigen Öffnungen, jede dieser Scheiben die stationäre Säule (35) mit ihrem Durchmesser derart umgibt, daß sie sich im wesentlichen bis zur Innenwand der oberen Hemisphäre (12) in der jeweiligen Höhe erstreckt, in der sie an der stationären Säule befestigt ist, unter der untersten (74 oder 76) der Scheiben an den Umfängen und der Verbindungsstelle der oberen (12) und unteren (14) Hemisphäre der Reaktionskammer ein Kollektorring (21) mit einem inneren Durchmesser angeordnet ist, der kleiner ist als der innere Durchmesser der Reaktionskammer an der Verbindungsstelle der genannten Hemisphären, und um den Kollektorring und benachbart zur Innenwand der oberen Hemisphäre eine stationäre Schaufel (82) angeordnet ist, deren Vorderkante sich in die Richtung entgegen der Rotationsrichtung der drehbaren Reaktionskammer erstreckt, wobei die Schaufel (82) in Verbindung steht mit einer flüssiges Produkt befördernden Leitung (80), schräg nach unten verläuft und in die stationäre Säule eintritt, die flüssiges Produkt befördernde Leitung in Verbindung steht mit einer Pumpeinrichtung zum kontinuierlichen Sammeln von flüssigem Produkt, das sich oberhalb des Kollektorringes ansammelt, die Schaufel (82) in ihrer stationären Position oberhalb des Kollektorringes durch die Flüssigkeit befördernde Leitung und die stationäre Säule, an der diese Leitung befestigt ist, abgestützt ist, und oberhalb der parallelen Scheiben und am Oberteil der oberen Hemisphäre zur unabhängigen axialen Rotation eine Fluid befördernde Einlaßleitung (18) gelagert ist, wobei diese Leitung in einer Fluid-Dispersionseinrichtung (22, 24) endet, und sie in Verbindung steht mit einer Zufuhrquelle für flüssigen Reaktanten und mit einer Einrichtung zum Ausgeben des flüssigen Reaktanten durch die rotierende Dispersionseinrichtung, wodurch der flüssige Reaktant durch Zentrifugalkraft nach außen geworfen und gleichmäßig an der Innenwand der oberen Hemisphäre (12) nahe ihrem Pol verteilt werden kann, um als dünner gleichmäßiger Film durch konzentrische Bänder von Reaktionsoberflächen der Innenwand der oberen Hemisphäre zu fließen, die durch die parallelen Scheiben getrennt sind, zur Reaktion mit dem kontrollierten gasförmigen Reaktanten, der die verschiedenen Öffnungen in der stationären Säule zwischen den parallelen Scheiben verläßt und wodurch das Reaktionsprodukt durch Zentrifugalkraft zum Kollektorring bewegt wird, zum Sammeln und zum Kontinuierlichen Entfernen durch die Schaufel, die Leitung zum Befördern des flüssigen Produktes und die Pumpeinrichtung.

2. Vorrichtung nach Anspruch 1, bei der die Fluid befördernde Einlaßleitung (18) und die Dispersionseinrichtung eine drehbare Einlaßleitung (18) umfaßt, die zur unabhängigen Rotation in einem kleinen hemisphärenartigen blasenförmigen Anhängsel (16) der oberen Hemisphäre (12) axial gelagert ist, sein Umfang an einer zentral angeordneten Öffnung gleichen Umfanges im oberen Zentrum der oberen Hemisphäre (12) abgedichtet ist, wobei die Einlaßleitung (18) gerade oberhalb des Umfanges des blasenförmigen Anhängsels in einer konzentrischen kreisförmigen Dispersionseinrichtung (22, 24) endet, die etwa den halben Durchmesser des blasenförmigen Anhängsels (16) an diesem Punkt und mehrere Öffnungen in ihrem Umfang aufweist, wodurch beim Zuführen von flüssigem Reaktanten durch die Einlaßleitung beim Drehen der Leitung die Flüssigkeit gegen die nahezu vertikalen Wände des hemisphärenartigen, blasenförmigen Anhängsels (16) geworfen wird und als Ergebnis der Rotation der oberen Hemisphäre (12) auf deren Seitenwand einen dünnen gleichmäßigen Film bildet.

3. Vorrichtung nach Anspruch 2, bei der die Einlaßleitung (18) gerade oberhalb der Ebene des Umfanges des blasenförmigen Anhängsels (16) in einer Verbindungsstelle mit mindestens zwei radial angeordneten Rohren endet, von denen jedes in Verbindung mit dem Einlaßrohr steht und deren jedes sich zur Wand des blasenförmigen Anhängsels nach außen erstreckt, wobei die Rohre von der Rotationsrichtung des Einlaßrohres weggewinkelt sind und jedes Rohr dadurch dicht an der Wandung des blasenförmigen Anhängsels und im wesentlichen parallel dazu endet, wodurch beim Zuführen von flüssigen Reaktanten durch das Einlaßrohr, während es rotiert, die Flüssigkeit gegen die nahezu vertikalen Wandungen des hemisphärenartigen, blasenförmigen Anhängsels geworfen wird, um als Ergebnis der Rotation der oberen Hemisphäre auf deren Seitenwand einen dünnen gleichmäßigen Film zu bilden.

4. Vorrichtung nach Anspruch 2, worin die konzentrische, kreisförmige Ausgabeeinrichtung, an der das Einlaßrohr (18) endet, eine erste (22) und eine zweite (24) Scheibe im wesentlichen identischen Durchmessers umfaßt, die durch Abstandshalter getrennt sind, wobei das Einlaßrohr (18) an einer zentralen Öffnung, die etwa den gleichen Durchmesser hat wie der Innendurchmesser des Einlaßrohres senkrecht zur ersten Scheibe (22) abgedichtet ist, die zweite Scheibe (24), die parallel zur ersten liegt und keine zentrale Öffnung aufweist, in einem Abstand von etwa einem viertel oder weniger des Durchmessers der Einlaßleitung von der ersten Scheibe getrennt ist, die rotierbare Einlaßleitung in einer höheren Geschwindigkeit drehbar ist als die rotierbare Reaktionskammer (13) und zwar in der Richtung entgegengesetzt zu der der Reaktionskammer.

5. Vorrichtung nach Anspruch 2, 3 oder 4, bei der die Reaktionskammer (13) aus einem geeigneten korrosionsbeständigen Material gefertigt ist, wobei die obere Hemisphäre (12) und das blasenförmige Anhängsel (16) glatte, polierte innere Oberflächen mit einer glatt abgerundeten Verbindungsstelle zwischen dem blasenförmigen Anhängsel (16) und der oberen Hemisphäre (12) aufweisen.

6. Vorrichtung nach irgendeinem der vorhergehenden Ansprüche, wobei zusätzlich eine zweite stationäre Schaufel (86) vorhanden ist, die unterhalb des Kollektorringes und benachbart zur Innenwand der rotierbaren Reaktionskammer nahe ihrer Peripherie angeordnet ist, wobei die Vorderkante dieser Schaufel (86) sich in einer Richtung entgegengesetzt zur Rotationsrichtung der rotierbaren Reaktionskammer (13) erstreckt, diese Schaufel weiter in Verbindung mit einer Pumpeinrichtung steht, um kontinuierlich irgendwelches Produkt geringer Qualität zu sammeln, das sich unterhalb des Kollektorringes ansammelt.

7. Vorrichtung nach irgendeinem der vorhergehenden Ansprüche, bei der die das Produkt sammelnde Schaufel (82), in Verbindung mit ihrer Flüssigkeit befördernden Leitung (80), auch in Verbindung steht mit einem Produktempfänger, der unter einem Druck unterhalb der Atmosphäre gehalten ist.

8. Vorrichtung nach irgendeinem der vorhergehenden Ansprüche, bei der der Kollektorring (21) einen Innendurchmesser von etwa 1,2 bis 7,6 cm (1/2 bis 3 Zoll) weniger hat als der Innendurchmesser des Reaktors an seinem Äquator, während der Außendurchmesser des Kollektorringes gleich dem Innendurchmesser der Reaktorkammer an ihrem Äquator sein kann.

9. Vorrichtung nach irgendeinem der vorhergehenden Ansprüche mit einer Wärmeaustauscheinrichtung zum Erhitzen oder Kühlen der Reaktionskammer von außen je nach der Art der ausgewählten Reaktanten.

10. Vorrichtung nach irgendeinem der vorhergehenden Ansprüche mit einer Einrichtung zum Zurückführen flüssiger Reaktionsprodukte zu den Reaktionsoberflächen.

11. Vorrichtung nach irgendeinem der vorhergehenden Ansprüche mit einer Diffusionseinrichtung, durch die der gasförmige Reaktant hindurchgeht, nachdem er aus den vielen Öffnungen in der stationären Säule ausgetreten ist.

12. Reaktor nach irgendeinem der vorhergehenden Ansprüche, bei dem der Kollektorring (21), der am Äquator der Reaktionskammer befestigt ist, eine sich erstreckende Lippe einer kreisförmigen Dichtung umfaßt, die dazu dient, zwei symmetrische konvexe Schalenköpfe an ihren Rändern zu verbinden, um die kugelförmige rotierbare Reaktionskammer zu bilden.

13. Rotierbarer Reaktor zum Umsetzen eines dünnen Filmes einer organischen Flüssigkeit mit einem gasförmigen Reaktanten, umfassend eine abgeflachte oder im wesentlichen kugelförmige Reaktionskammer (13) die zur Rotation um ihre Achse in einer im wesentlichen horizontalen Position auf einem Trägerrahmen (17) montiert ist, mit einer inneren Reaktionsoberfläche, einer Evakuierungseinrichtung, um die Reaktionskammer unter einem unterhalb des Atmosphärendruckes liegenden Druck zu halten, einer Trenneinrichtung mit einer Vielzahl paralleler Scheiben (52, 60, 70, 74, 76), die die Reaktionsoberfläche in aufeinanderfolgende Reaktionsbereiche unterteilen und so entsprechende einzelne Kammern bilden, denen die Reaktionsbereiche ausgesetzt sind, wobei die Scheiben senkrecht zur Rotationsachse liegen, einer ersten Ausgabeeinrichtung (18), um organische Flüssigkeit auf der Reaktionsoberfläche zu deponieren, einer zweiten Ausgabeeinrichtung (36), um kontrollierte Mengen des gasförmigen Reaktanten innerhalb der einzelnen Kammern abzugeben, einer Rotationseinrichtung zum Drehen der Reaktionskammer mit einer Geschwindigkeit, bei der die organische Flüssigkeit durch Zentrifugalkraft kontinuierlich nacheinander über die aufeinanderfolgenden Reaktionsbereiche zum Aussetzen gegenüber dem gasförmigen Reaktanten als ein dünner Film bewegt wird und das erhaltene Reaktionsprodukt kontinuierlich zur inneren Peripherie der Reaktionskammer bewegt wird, wo es sich ansammelt, einer Kühleinrichtung zum Steuern der Reaktionstemperatur und einer Einrichtung (82) zum Entfernen des Reaktionsproduktes aus dem Reaktor.

14. Reaktor nach Anspruch 13 mit einer Trennwandeinrichtung (78), die verhindert, daß sich geringe Mengen dunklen Produktes von unterhalb der Trennwandeinrichtung mit dem Hauptkörper des Reaktionsproduktes darüber vereinigt und einer Einrichtung (86) zum Entfernen der geringen Mengen dunklen Produktes aus dem rotierenden Reaktor, während er in Betrieb ist.

15. Vorrichtung nach irgendeinem der vorhergehenden Ansprüche, bei der die gesamte innere Reaktionsoberfläche der Reaktionskammer glatt und poliert ist.

**Revendications**

1. Dispositif de sulfonation comprenant une chambre de réaction rotative (13) fournissant une surface pour l'écoulement d'un liquide sur celle-ci sous forme d'un film mince, la chambre ayant un arbre creux (11) qui y est fixé et est en communication avec ladite chambre (13), ledit arbre creux (11) étant tourillonné dans un support (17) et relié à des moyens pour faire tourner ledit arbre autour d'un axe fixe, des entrées pour du gaz et du liquide dans la chambre, des moyens pour évacuer les produits de réaction et des moyens de pompage de gaz pour mettre sous vide la chambre de réaction étant prévus, caractérisé en ce que la chambre de réaction (13) est sphéroïdale, en ayant des hémisphères supérieur (12) et inférieur (14), et tourne autour d'un axe sensiblement vertical; ledit arbre creux (11) entourant la partie inférieure d'une colonne stationnaire (35) s'étendant vers le haut sensiblement jusqu'à l'extrémité supérieure de l'hémisphère supérieur (12) à l'intérieur de ladite chambre de réaction rotative (13), ledit arbre creux (11) pouvant tourner autour de ladite colonne stationnaire (35) et ladite colonne ayant une ouverture (88) à l'intérieur de la chambre de réaction rotative (13), laquelle ouverture (88) sert, en liaison avec lesdits moyens de pompage de gaz, pour mettre sous vide ladite chambre de réaction, ladite colonne stationnaire (35) contenant au moins deux conduits d'entrée transportant du gaz (36) en communication avec des sources commandées d'un réactif gazeux, chacun desdits conduits transportant du gaz (36) se terminant à son extrémité supérieure dans une ouverture (42, 58, 68, 75) dans ladite colonne stationnaire, chacune desdites ouvertures étant placée à un niveau différent mais à l'intérieur dudit hémisphère supérieur (12), une pluralité de disques parallèles étant fixés à ladite colonne stationnaire, dont l'un (52) juste au-dessus de l'ouverture la plus haute (42) dans ladite colonne, l'un (74 ou 76) juste au-dessous de l'ouverture la plus basse (68 ou 75) et un autre entre chacune des ouvertures restantes, chacun desdits disques encerclant la colonne stationnaire (35), son diamètre étant tel qu'il s'étend sensiblement jusqu'à la paroi intérieure de l'hémisphère supérieur (12) au niveau particulier auquel il est fixé à la colonne stationnaire; au-dessous du plus inférieur (74 ou 76) desdits disques aux périmètres et jonction desdits hémisphères supérieur (12) et inférieur (14) de ladite chambre de réaction, est mis en place un anneau collecteur (21) ayant un diamètre intérieur inférieur au diamètre intérieur de la chambre de réaction à la jonction desdits hémisphères, et près dudit anneau collecteur et de façon adjacente à la paroi intérieure dudit hémisphère supérieur, est placé un godet stationnaire (82) ayant son bord avant s'étendant dans la direction opposée à la direction de rotation de ladite chambre de réaction rotative, ledit godet (82) étant en communication avec une ligne de transport du produit liquide (80) inclinée vers le bas et entrant dans ladite colonne stationnaire, ladite ligne de transport de produit liquide étant en communication avec des moyens de pompage pour recueillir continuellement le produit liquide s'accumulant au-dessus de l'anneau collecteur, ledit godet (82) étant supporté dans sa position stationnaire au-dessus dudit anneau collecteur par la ligne de transport de liquide et ladite colonne stationnaire à laquelle ladite ligne est fixée; et, au-dessus desdits disques parallèles et à l'extrémité supérieure dudit hémisphère supérieur, est tourillonné, pour une rotation axiale indépendante, un conduit de transport de fluide d'entrée (18) s'achevant dans des moyens de dispersion de fluide (22, 24), ledit conduit de transport de fluide étant en communication avec une source d'alimentation en réactif liquide et avec des moyens pour délivrer ledit réactif liquide à travers lesdits moyens de dispersion rotatifs, par quoi ledit réactif liquide peut être lancé vers l'extérieur, par force centrifuge, et distribué régulièrement sur la paroi intérieure de l'hémisphère supérieur (12) près de son pôle, pour s'écouler sous forme de film uniforme mince à travers des bandes concentriques de surfaces de réaction de la paroi intérieure de l'hémisphère supérieur, séparées par lesdits disques parallèles, pour réagir avec le réactif gazeux contrôlé quittant les différentes ouvertures de ladite colonne stationnaire entre lesdits disques parallèles et, ainsi, ledit produit de réaction se déplacera vers l'anneau collecteur par force centrifuge pour être recueilli et continuellement évacué par ledit godet, ladite ligne de transport de produit liquide et lesdits moyens de pompage.

2. Dispositif selon la revendication 1, dans lequel le conduit de transport de fluide d'entrée (18) et les moyens de dispersion comprennent un conduit d'entrée rotatif (18) tourillonné axialement pour une rotation indépendante dans un petit appendice hémisphérique en forme de bulle (16) sur ledit hémisphère supérieur (12), son périmètre étant scellé sur une ouverture située centralement de périmètre égal dans le centre d'extrémité supérieur dudit hémisphère supérieur (12), ledit conduit d'entrée (18) se terminant juste au-dessus du périmètre de l'appendice en forme de bulle en des moyens de dispersion circulaires concentriques (22, 24) ayant environ la moitié du diamètre de l'appendice en forme de bulle (16) à ce point et ayant une pluralité d'ouvertures dans leur périmètre, par quoi, lorsqu'on alimente du réactif liquide à travers le conduit d'entrée tout en faisant tourner le conduit, le liquide est lancé contre les parois pratiquement verticales de l'appendice en forme de bulle hémisphérique (16) pour alors former un film mince uniforme sur la paroi latérale de l'hémisphère supérieur (12) en conséquence de sa rotation.

3. Dispositif selon la revendication 2, dans lequel ledit conduit d'entrée (18) se termine juste au-dessus du plan du périmètre dudit appendice en forme de bulle (16) dans une jonction avec au moins deux tubes disposés radialement, chacun d'eux étant en communication avec ledit conduit d'entrée, et chacun d'eau s'étendant vers l'extérieur vers les parois dudit appendice en forme de bulle, lesdits tubes étant orientés au loin de la direction de rotation dudit conduit d'entrée, chaque tube pour ainsi se terminer à proximité des parois dudit appendice en forme de bulle et de façon sensiblement parallèle à celui-ci pour qu'ainsi, en alimentant du réactif liquide à travers le conduit d'entrée tandis qu'il tourne, le liquide est lancé contre les parois pratiquement verticales de l'appendice hémisphérique en forme de bulle pour, alors, former un film uniforme mince sur la paroi latérale de l'hémisphère supérieur en conséquence de sa rotation.

4. Dispositif selon la revendication 2, dans lequel les moyens de dispersion circulaires concentriques auxquels ledit conduit d'entrée (18) s'achève, comprennent des premier (22) et second (24) disques de diamètre sensiblement identique, séparés par des entretoises, ledit conduit d'entrée (18) étant scellé perpendiculairement au premier disque (22) sur une ouverture centrale ayant approximativement le même diamètre que le diamètre intérieur dudit conduit d'entrée, le second disque (24), parallèle au premier et n'ayant pas d'ouverture centrale, est séparé du premier par une distance d'environ un quart ou moins du diamètre du conduit d'entrée, ledit conduit d'entrée rotatif pouvant tourner à une vitesse plus élevée que la chambre de réaction rotative (13) dans la direction opposée à celle de ladite chambre de réaction.

5. Dispositif selon la revendication 2, la revendication 3 ou la revendication 4, dans lequel la chambre de réaction (13) est fabriquée en matériau résistant à la corrosion approprié, ledit hémisphère supérieur (12) et l'appendice en forme de bulle (16) ayant des surfaces intérieures polies lisses avec une jonction arrondie lisse entre ledit appendice en forme de bulle (16) et ledit hémisphère supérieur (12).

6. Dispositif selon l'une quelconque des revendications précédentes, dans lequel il existe en plus un second godet stationnaire (86), celui-ci étant placé au-dessous dudit anneau collecteur et de façon adjacente à la paroi intérieure de la chambre de réaction rotative à proximité de sa périphérie, ledit godet (86) ayant son bord avant s'étendant dans une direction opposée à la direction de rotation de ladite chambre de réaction rotative (13), ledit godet étant de plus en communication avec des moyens de pompage pour recueillir de façon continue tout produit de faible qualité s'accumulant au-dessous de l'anneau collecteur.

7. Dispositif selon l'une quelconque des revendications précédentes, caractérisé en ce que ledit godet collecteur de produit (82) en communication avec sa ligne de transport de liquide (80) est également en communication avec un réceptacle de produit maintenu à pression sous-atmosphérique.

8. Dispositif selon l'une quelconque des revendications précédentes, dans lequel l'anneau collecteur (21) présente un diamètre intérieur d'environ de 1,2 cm à 7,6 cm (1/2 à 3 pouces) inférieur au diamètre intérieur du réacteur à son équateur, tandis que le diamètre extérieur de l'anneau collecteur peut être égal au diamètre intérieur de la chambre de réaction à son équateur.

9. Dispositif selon l'une quelconque des revendications précédentes, ayant des moyens d'échange de chaleur pour effectuer le chauffage ou le refroidissement de la chambre de réaction de façon externe, selon la nature des réactifs choisis.

10. Dispositif selon l'une quelconque des revendications précédentes, comportant des moyens pour recycler lesdits produits de réaction liquides sur lesdites surfaces de réaction.

11. Dispositif selon l'une quelconque des revendications précédentes, comportant des moyens de diffusion à travers lesquels ledit réactif gazeux passe après s'être échappé de la pluralité d'ouvertures dans la colonne stationnaire.

12. Réacteur selon l'une quelconque des revendications précédentes, dans lequel l'anneau collecteur (21) fixé à l'équateur de la chambre de réaction comprend une lèvre d'un joint d'étanchéité circulaire qui sert à relier deux coupoles symétriques convexes à leurs pourtours pour former ladite chambre de réaction rotative sphéroïdale.

13. Réacteur rotatif pour faire réagir un film mince d'un liquide organique avec un réactif gazeux comprenant une chambre de réaction sensiblement sphéroïdale ou ellipsoïdale aplatie (13) montée sur un châssis de support pour tourner sur son axe dans une position sensiblement horizontale, ayant une surface de réaction intérieure; des moyens de mise sous vide pour maintenir ladite chambre de réaction sous pression sous-atmosphérique; des moyens de séparation comprenant une pluralité de disques parallèles (52, 60, 70, 74, 76) pour diviser ladite surface de réaction en zones de réaction successives, en formant ainsi des chambres individuelles correspondantes auxquelles lesdites zones de réaction sont exposées; lesdits disques étant perpendiculaires audit axe de rotation, un premier moyen de dépôt (18) pour déposer ledit liquide organique sur ladite surface de réaction, un second moyen de dépôt (36) pour déposer des quantités contrôlées dudit réactif gazeux à l'intérieur desdites chambres individuelles; des moyens rotatifs pour faire tourner ladite chambre de réaction à une vitesse telle que ledit liquide organique est continuellement déplacé par force centrifuge sous forme d'un film mince, successivement sur lesdites zones de réaction successives pour l'exposer audit réactif gazeux, et le produit de réaction résultant est continuellement déplacé vers la périphérie intérieure de ladite chambre de réaction où il s'accumule, des moyens de refroidissement pour contrôler la température de réaction et des moyens (82) pour évacuer ledit produit de réaction du réacteur.

14. Réacteur selon la revendication 13, comportant des moyens formant cloison (78) pour éviter que de petites quantités de produit assombri ne se combinent, de dessous les moyens formant cloison, avec le corps principal de produit de réaction au-dessus de lui et des moyens (86) pour évacuer lesdites petites quantités de produit assombri du réacteur rotatif tandis qu'il fonctionne.

15. Dispositif selon l'une quelconque des revendications précédentes, dans lequel toute la surface de réaction intérieure de la chambre de réaction est lisse et polie.

FIG. 1

FIG. 2

FIG. 3

# FIG. 4

# FIG. 6

FIG. 5

0 111 478